# EUROPEAN PATENT SPECIFICATION

(11) **EP 4 438 256 B1**
(45) Date of publication and mention of the grant of the patent: **28.01.2026**
(21) Application number: 23165003.7
(22) Date of filing: 29.03.2023
(51) Int. Cl.: B26F 1/44, H01R 13/52

(54) **PUNCHING TOOL**
STANZWERKZEUG
OUTIL DE POINÇONNAGE

(43) Date of publication of application: 02.10.2024
(73) Proprietor: Aptiv Technologies AG, 8200 Schaffhausen (CH)
(72) Inventor: KISS, Thomas, 7400 Oberwart (AT)
(74) Representative: Bardehle Pagenberg Partnerschaft mbB Patentanwälte Rechtsanwälte

(56) References cited:
- EP-A1- 3 236 537
- WO-A1-2008/122844
- WO-A1-2017/178647
- US-B1- 10 897 103

## Description

### 1. Technical field

The present disclosure relates to a punching tool, a conductor receiving element, and a punching system comprising said punching tool and said conductor receiving element.

### 2. Prior art

For injection molded plastic components, it is often necessary to perform post-processing. For example, machining-related rework such as deburring or removal of sprues must be performed. However, various cases exist where post-processing must be performed to achieve a desired functionality of the injection molded component.

For example, conductor receiving elements for electrical connectors are known which have a plurality of elongated through holes to receive electrical conductors such as cables and/or terminals. Regularly, at least some of these through holes are at least partially blocked by a blocking element, so that no electrical conductor can be passed through until the blocking element has been removed. With the aid of a corresponding punching tool, the blocking element can be removed in order to adapt the corresponding through hole so that an electrical conductor can be fed through. This makes it possible to customize the electrical connector using the conductor receiving element. For example, a conductor receiving element can be adapted to different numbers of conductors depending on how many blocking elements have been removed. For example, eight blocking elements can be removed from a conductor receiving element with twelve blocked through holes to provide an eight-pole electrical connector. To prevent the cable channel following a blocked through hole from being exposed and for example moisture from penetrating into the electrical connector, the blocking elements are each regularly connected to a corresponding sealing pin which protrudes out of the through hole, for example to close a hole in a collective sealing.

WO 2008/122844 A1 discloses a conductor receiving element for an electrical connector, wherein the conductor receiving element comprises a plurality of through holes with sealing membranes which are torn by the introduction of electric connection members only in those positions in which they are received.

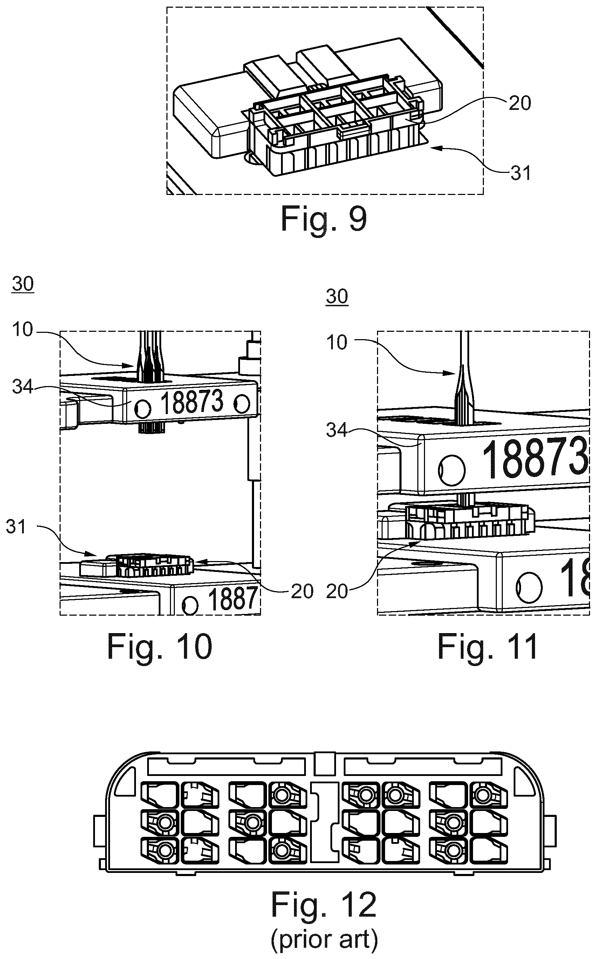

The known punching tools and/or conductor receiving elements have the disadvantages that residues regularly remain in the component when the said blocking elements are removed (see Fig. 12), damage to the through holes occurs in particular because of the punching tool, and/or a high punching force is required.

Thus, it is an object of the present disclosure to provide a punching tool, a conductor receiving element, and a punching system comprising said punching tool and said conductor receiving element that overcome the aforementioned drawbacks at least partially.

### 3. Summary of the invention

This object is achieved, at least partly, by a punching tool, a conductor receiving element, and a punching system comprising said punching tool and said conductor receiving element, as defined in the independent claims. Further aspects of the present disclosure are defined in the dependent claims.

In particular, the object is achieved by a punching tool for punching out at least one beam element with both ends attached to the inside surface of an elongated through hole, wherein the punching tool has an elongated shape with a punching end and a holding end. The punching end comprises a front surface for being inserted into the elongated through hole first, and at least one cutting edge which is spaced apart from the front surface along the longitudinal axis of the punching tool and extends substantially transverse to the longitudinal axis.

The punching tool may be configured for punching polymer materials. Moreover, the punching tool may be adapted to be used without a die. Further, the punching tool may be integrally formed, whereas it is understood that the punching tool may also comprise separate parts being assembled. Preferably the punching tool is made of a metallic material such as steel, as this allows for longer durability.

Further, the punching end may be referred to as the end of the punching tool which punches the respective material/element. Said holding end may be configured to be manually held and/or to be mounted within a respective punching system.

The front surface is preferably substantially perpendicular to the longitudinal axis of the punching tool. This allows elements to be reliably pressed out of through holes and, in particular, avoids jamming. The front surface may comprise more than one individual surface. Exemplarily, the front surface may be divided by a groove and/or a recess into at least two separate surfaces which lie in the same plane.

The at least one cutting edge may be also referred to as the at least one punching edge. The surfaces of the punching tool defining the at least one cutting edge preferably include an angle which lies in the range from 45° to 90°, preferably from 60° to 90°, further preferably from 80° to 90° and most preferably from 85° to 90°.

By the at least one cutting edge being spaced apart from the front surface along the longitudinal axis of the punching tool and extending substantially transverse to the longitudinal axis a damage to the through hole because of the punching tool can be avoided. This is as first the front surface is inserted into the elongated through hole so that the punching tool is already at least partially guided when the at least one cutting edge is inserted. Hence an accidental cutting of the through hole by the at least one cutting edge can be reliably avoided.

Optionally the minimum distance between the front surface and the at least one cutting edge lies in a range from 0.2 mm to 0.8 mm, preferably from 0.3 mm to 0.7 mm, and further preferably from 0.4 mm to 0.6 mm. These minimum distances have proven to be advantageous in that they allow for a sufficient guiding of the punching tool while at the same time avoiding an excessive length of the punching tool.

The at least one cutting edge may be adjacent to a peripheral surface of the punching tool. The peripheral surface may represent a guiding surface of the punching tool which allows for a guided sliding in the elongated through hole. By the at least one cutting edge being adjacent to the peripheral surface an element being attached to the through hole in which the punching tool is inserted can be separated directly at the point of attachment. Thereby a bending and uncontrolled breaking can be avoided. Thus, residues in the respective through hole can be avoided or at least reduced.

The at least one cutting edge may be inclined relative to the longitudinal axis of the punching tool, wherein preferably the inclination angle between the at least one cutting edge and the longitudinal axis lies in a range from 91° to 103°, preferably from 93° to 100°, and further preferably from 94° to 97°. It is to be noted that those ranges do not exclude that the at least one cutting edge extends substantially transverse to the longitudinal axis. By the at least one cutting edge being inclined relative to the longitudinal axis of the punching tool a cutting can be facilitated as a shear movement is favored.

The punching end may comprise a recess being formed into the front surface along the longitudinal axis of the punching tool, wherein preferably the at least one cutting edge forms part of the recess. The recess preferably tapers from the front surface to the at least one cutting edge. Said recess can ensure that an element to be removed is first received in the punching end and stabilized therein before it is separated by the at least one trailing cutting edge. Moreover, by the recess tapering from the front surface to the at least one cutting edge the element to be removed can be particularly reliably received in the recess and guided to the cutting edge. The recess may have a variety of geometries, as set out in the following.

The recess may have a T-shape, or an X-shape as seen in a direction from the punching end to the holding end. The T-shape allows to receive and cut out two beam elements which are connected to form a T-shape. Further, the X-shape allows to receive and cut out two beam elements which intersect to form an X-shape.

The punching tool may comprise a flex portion arranged between the punching end and the holding end, wherein in the flex portion the cross-sectional area of the punching tool is reduced compared to portions of the punching tool being adjacent to the flex portion, wherein preferably in the flex portion the cross-sectional area continuously decreases to a minimum. The flex portion can increase flexibility between the two ends of the punching tool. Consequently, the transmission of bending loads through the punching tool is at least reduced. This means that if the punching tool has already been inserted into a through hole, a displacement of the holding end relative to the through hole and transverse to the longitudinal direction can be prevented from causing the punching end to tilt and thereby damaging the through hole. In summary, a more reliable punching can be achieved.

The peripheral edge of the front surface may be rounded and/or beveled, wherein said peripheral edge is preferably substantially perpendicular to the longitudinal axis of the punching tool. It is understood that if the front surface is separated into two surfaces as mentioned above, the peripheral edge of the front surface can also be separated.

The punching tool may comprise at least two, particularly at least three, and further particularly at least four, cutting edges configured as the at least one cutting edge described herein. As a result, also more complex components, which are fastened with several attachment points in a through hole, can be reliably removed. Preferably at least two of said cutting edges are arranged opposite to each other and are axially spaced apart from each other along the longitudinal axis. Thereby can be achieved that the element to be removed is subjected to at least two shearing operations at different times. This allows that an even more reliable punching can be achieved.

Further, the above object is also achieved by a conductor receiving element for an electrical connector, wherein the conductor receiving element comprises a plurality of elongated through holes, wherein at least one through hole is at least partially blocked; a first beam element with a first end and a second end, wherein the first end and the second end are attached to the inside surface of the at least one through hole, and a sealing pin for sealing a hole of a collective sealing, wherein the sealing pin is attached to the first beam element and extends out of the at least one through hole.

Preferably, through the at least one through hole being at least partially blocked no electrical conductor can be passed through until the first beam element has not been removed. With the aid of the punching tool described herein the first beam element and optionally the second beam element as mentioned in the following may be removed to adapt the at least one through hole so that an electrical conductor can be fed through.

By using the conductor receiving element it is possible to customize an electrical connector. Exemplarily, a conductor receiving element with multiple blocked through holes can be adapted to a different number of conductors depending on how many blocking elements are removed. For example, eight first beam elements can be removed from a conductor receiving element with twelve through holes being blocked by respective first beam elements to provide an eight-pole electrical connector.

The sealing pin may allow to prevent a cable channel following a through hole being blocked from being exposed and for example moisture from penetrating into the respective electrical connector.

Further, the conductor receiving element may be integrally formed with the first beam element. Exemplarily by means of injection molding.

The first beam element is preferably linear. This has shown to facilitate removal. However, it is also conceivable that the first beam element is curved and/or angled. Further, the first beam element may have a substantially rectangular cross-section. "Substantially" in this context means that the edges may be rounded, as it is exemplarily required for injection molded parts. Preferably, the first beam element is distinctly identifiable between the first end and the second end at any position. This is also the case if the first beam element intersects another beam element or has a kink.

It is understood that of the plurality of elongated through holes, multiple or even all through holes may be at least partially blocked.

The first beam element and the sealing pin preferably do not intersect. Exemplarily, if the sealing pin has a cylindrical shape and the first beam element substantially has the shape of a rectangular cuboid, then a base area of the cylindrical shape may be attached to the outside of the rectangular cuboid shape of the first beam element. Particularly, said rectangular cuboid shape and said cylindrical shape may be integrally formed. However, the rectangular cuboid shape may not protrude through the cylindrical shape. In particular, the first beam element and the sealing pin preferably do not define a section volume. The first beam element and the sealing pin not intersecting with each other has at least two advantages. First, this configuration allows that the manufacture of the conductor receiving element is simplified. The fact that the first beam element and the sealing pin do not intersect means that there is a separation plane, which allows for simpler design of the mold cores for injection molding. Secondly, this configuration has proven to be advantageous in that it promotes more reliable separation of the first beam element compared to cases where the first beam element and the sealing pin intersect.

The conductor receiving element may comprise a second beam element with a first end and a second end, wherein the first beam element and the second beam element intersect, wherein the first end and the second end of the second beam element are attached to the inside surface of the at least one through hole. Preferably, the first beam element and the second beam element form an X-shape. This shape has proven to be particularly stable and at the same time easy to remove.

Alternatively, the conductor receiving element may comprise a second beam element with a first end and a second end, wherein the first end of the second beam element is attached to the inside surface of the at least one through hole and the second end of the second beam element is attached to the first beam element. Preferably, the first beam element and the second beam element form a T-shape. This shape has proven to be particularly easy to remove and at the same time allows for a sufficient level of stability.

Furthermore, it is understood that the second beam element may be configured as the first beam element.

The sealing pin may be attached to the first beam element and the second beam element, wherein the first beam element and the second beam element preferably do not intersect with the sealing pin. Exemplarily, if the sealing pin has a cylindrical shape and the beam elements substantially each have the shape of a rectangular cuboid, then a base area of the cylindrical shape may be attached to the outside of the rectangular cuboid shape of the beam elements. As above, said rectangular cuboid shapes and said cylindrical shape may be integrally formed, whereas the rectangular cuboid shapes may not protrude through the cylindrical shape. In particular, the beam elements and the sealing pin preferably do not define a section volume. It has shown that by the sealing pin being attached to the first beam element and the second beam element the stability and/or stiffness of the sealing pin within the respective through hole may be enhanced.

Moreover, the above object is also achieved by a punching system comprising at least one punching tool as described herein, and the conductor receiving element as described herein, wherein the at least one punching tool and the conductor receiving element are configured such that the at least one punching tool is slidingly guided in the at least one through hole which is at least partially blocked. Exemplarily, the peripheral surface of the punching tool may be configured to be slidingly guided by the inside surface of the at least one through hole.

The punching system preferably further comprises a receptacle in which the conductor receiving element can be floatingly supported. This allows inaccuracies regarding the positioning of the punching tool relative to the conductor receiving element to be compensated. This makes it possible to achieve precise guidance of the punching tool in the corresponding through hole and to ensure that any tolerance-related offset of the punching tool relative to the conductor receiving element does not lead to damage.

Further, the punching system is configured such that the height of the first and/or second beam element measured along the at least one through hole being at least partially blocked is larger than the distance by which the at least one cutting edge is spaced apart from the front surface along the longitudinal axis of the punching tool. Hence, a contact of the punching tool with the sealing pin can be avoided which ensures a reliable punching operation.

### 4. Brief description of the accompanying figures

In the following, the accompanying figures are briefly described:
Fig. 1 shows a punching tool according to the present invention in perspective view;
Fig. 2 shows a detail perspective view of the punching end of the punching tool;
Fig. 3 shows a detail side view of the punching end of the punching tool;
Fig. 4 shows a conductor receiving element according to the present invention in top view;
Fig. 5 shows a detail of Fig. 4;
Fig. 6 shows a detail of a perspective view of the conductor receiving element;
Fig. 7 shows a perspective view of the conductor receiving element;
Fig. 8 shows a punching system according to the present invention in perspective view;
Fig. 9 shows a detail of the receptacle of the punching system of Fig. 8;
Fig. 10 shows the punching system in perspective view prior to punching;
Fig. 11 shows the punching system in perspective view during punching, and
Fig. 12 shows a prior art conductor receiving element.

### 5. Detailed description of the figures

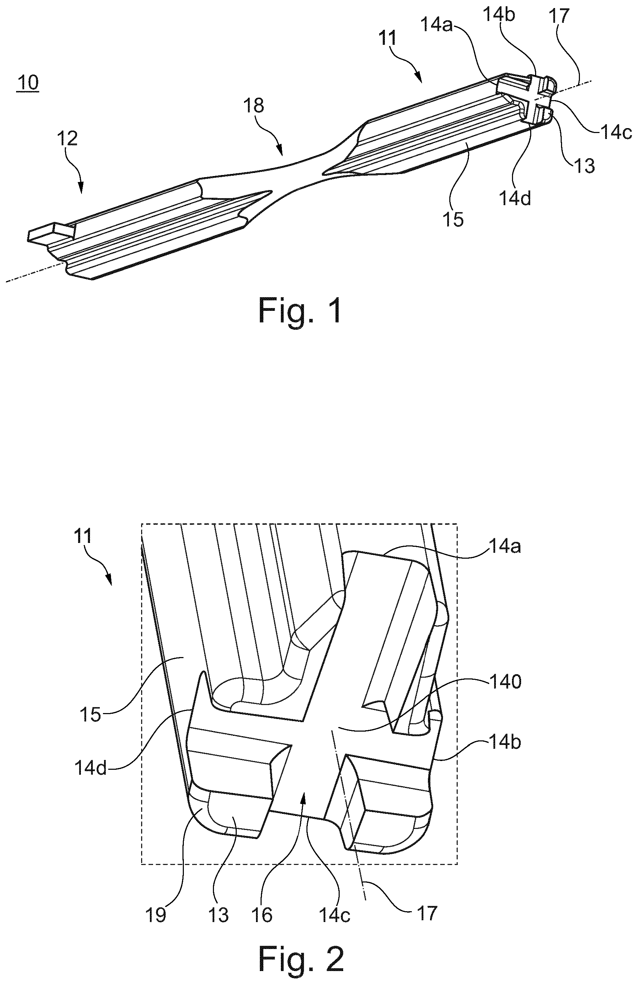

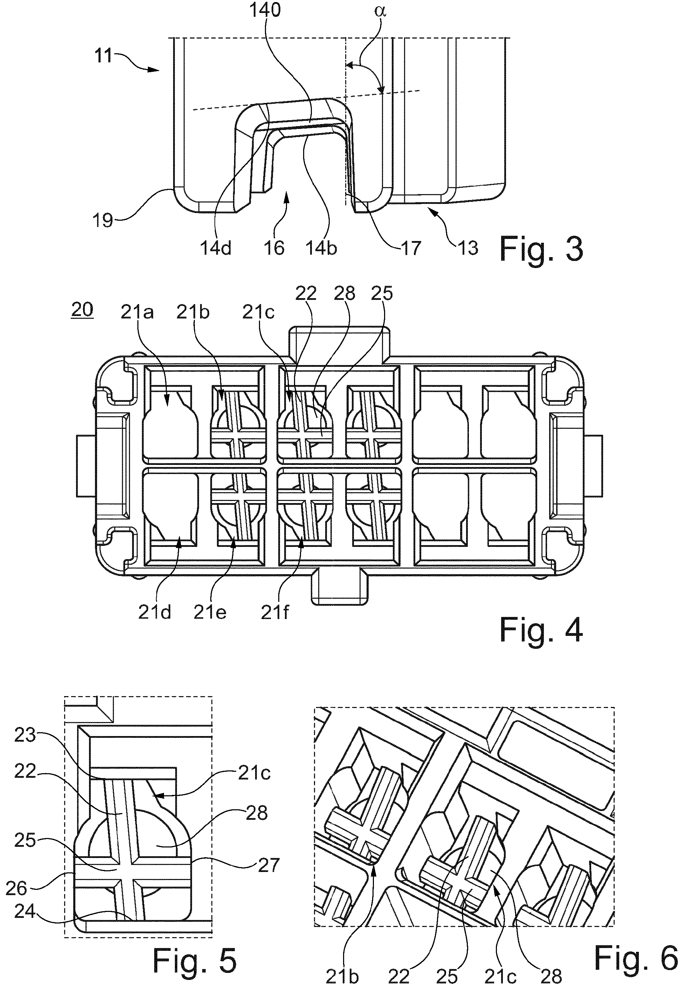

Fig. 1 shows a punching tool 10 for punching out at least one beam element 22 with both ends 23, 24 attached to the inside surface of an elongated through hole 21c (see Fig. 4). The punching tool 10 has an elongated shape with a punching end 11 and a holding end 12. The punching tool 10 comprises a flex portion 18 arranged between the punching end 11 and the holding end 12, wherein in the flex portion 18 the cross-sectional area of the punching tool 10 is reduced compared to portions of the punching tool 10 being adjacent to the flex portion 18. Particularly, in the flex portion 18 the cross-sectional area continuously decreases to a minimum.

The punching end 11 is depicted in detail in Figs. 2 and 3. Said punching end 11 comprises a front surface 13 for being inserted into the elongated through hole first. From Fig. 2 particularly it is understood that the front surface 13 is segmented into four surfaces which lie in one plane. Further, the punching end 11 comprises four cutting edges 14a, 14b, 14c, 14d which are spaced apart from the front surface 13 along the longitudinal axis 17 of the punching tool 10 and extend substantially transverse to the longitudinal axis 17.

As depicted in Fig. 2, the cutting edges 14a, 14b, 14c, 14d are adjacent to a peripheral surface 15 of the punching tool 10. Moreover, the punching end 11 comprises a recess 16 being formed into the front surface 13 along the longitudinal axis 17 of the punching tool 10, wherein the cutting edges 14a, 14b, 14c, 14d form part of the recess 16. Said recess 16 has an X-shape as seen in a direction from the punching end 11 to the holding end 12. Further, said recess 16 tapers from the front surface 13 to the four cutting edges 14a, 14b, 14c, 14d. Even further, the peripheral edge 19 of the front surface 13 is rounded, wherein said rounded peripheral edge 19 is substantially perpendicular to the longitudinal axis 17 of the punching tool 10.

As depicted in detail in Fig. 3 the cutting edges 14b and 14d are inclined relative to the longitudinal axis 17 of the punching tool 10, wherein the inclination angle α between the cutting edges 14b, 14d and the longitudinal axis 17 lies in a range from 94° to 97°. Further, as also depicted in Fig. 3, the cutting edges 14b, 14d are arranged opposite to each other and are axially spaced apart from each other along the longitudinal axis 17. Moreover, all cutting edges 14a, 14b, 14c, 14d are connected by a substantially planar surface 140.

Figs. 4 to 7 show a conductor receiving element 20 for an electrical connector. The conductor receiving element 20 comprises a plurality of elongated through holes 21a, 21b, 21c, 21d, 21e, 21f. The through holes 21b, 21c, 21e, 21f are at least partially blocked. The conductor receiving element 20 further comprises a first beam element 22 with a first end 23 and a second end 24, wherein the first end 23 and the second end 24 are attached to the inside surface of the blocked through hole 21c. It is understood that the through holes 21b, 21e, 21f are blocked similarly. Moreover, the conductor receiving element 20 comprises a sealing pin 28 for sealing a hole of a collective sealing, wherein the sealing pin 28 is attached to the first beam element 22 and extends out of the through hole 21c. The other sealing pins are not numbered for the sake of simplicity.

Further, the conductor receiving element 20 comprises a second beam element 25 with a first end 26 and a second end 27, wherein the first beam element 22 and the second beam element 25 intersect, wherein the first end 26 and the second end 27 of the second beam element 25 are attached to the inside surface of the at least one through hole 21c. Thereby the sealing pin 28 is attached to the first beam element 22 and the second beam element 25, wherein the first beam element 22 and the second beam element 25 do not intersect with the sealing pin 28.

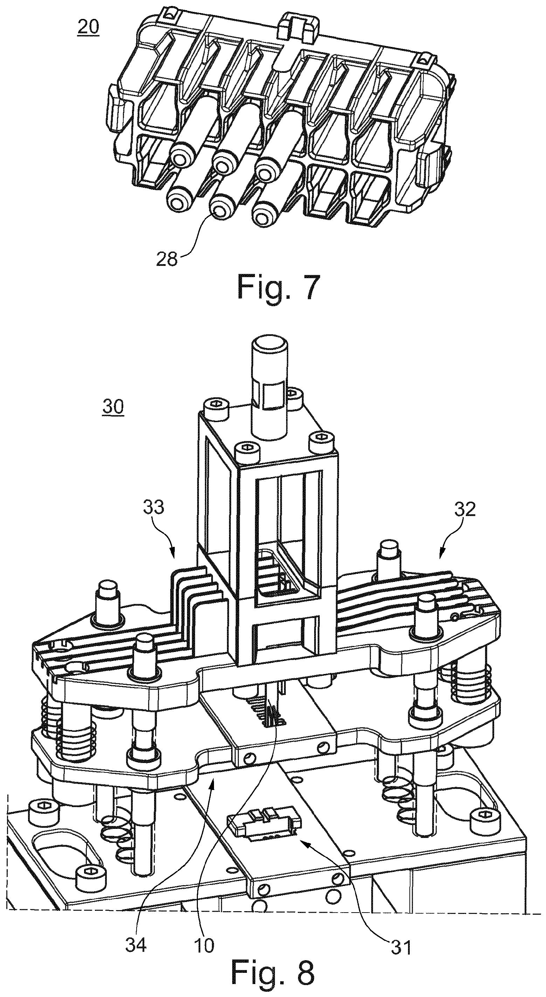

Figs. 8 to 11 show a punching system 30 and details thereof. The punching system 30 comprises at least one punching tool 10 as described in the foregoing, and the conductor receiving element 20 as described in the foregoing, whereas in Fig. 8 the conductor receiving element 20 is hidden. As shown in Figs. 10 and 11, the at least one punching tool 10 and the conductor receiving element 20 are configured such that the at least one punching tool 10 is slidingly guided in the at least one through hole which is at least partially blocked. Further, as depicted in detail in Fig. 9, the punching system 30 comprises a receptacle 31 in which the conductor receiving element 20 can be floatingly supported.

The punching system 30 of Fig. 8 further comprises lift plates 32 and fixing plates 33. The lift plates 32 allow to lift punching tools 10 which are not required for a punching operation because exemplarily only one through hole of a plurality of through holes needs to be punched free. When lifted by the lift plates 32 the respective punching tools 10 may be fixed in the upper position relative to the receptacle 31 by means of the fixing plates 33. Thus, only the punching tools 10 which are intended to perform a punching operation move down towards the receptacle 31 within the punching tool guiding 34 when the punching is performed (cf. Figs. 10 and 11).

Further, even though not explicitly depicted in the Figs., the punching system 30 may comprise blow nozzles which blow against the punching end 11 of the at least one punching tool 10 after punching operation. Thus, residues at the punching end 11 may be reliably removed. Moreover, a suction chamber may be provided below the receptacle 31 which serves to suck away the punched out components.

### List of reference signs

- 10: punching tool
- 11: punching end
- 12: holding end
- 13: front surface
- 14a, 14b, 14c, 14d: cutting edges
- 15: peripheral surface
- 16: recess
- 17: longitudinal axis
- 18: flex portion
- 19: peripheral edge
- α: inclination angle between cutting edge and longitudinal axis
- 140: planar surface

- 20: conductor receiving element
- 21a, 21b, 21c, 21d, 21e, 21f: elongated through holes
- 22: first beam element
- 23: first end of the first beam element
- 24: second end of the first beam element
- 25: second beam element
- 26: first end of the second beam element
- 27: second end of the second beam element
- 28: sealing pin

- 30: punching system
- 31: receptacle
- 32: lift plates
- 33: fixing plates
- 34: punching tool guiding

## Claims

1. A punching tool (10) for punching out at least one beam element (22) with both ends (23, 24) attached to the inside surface of an elongated through hole (21c), wherein the punching tool (10) has an elongated shape with a punching end (11) and a holding end (12), wherein the punching end (11) comprises
a front surface (13) for being inserted into the elongated through hole first, and
at least one cutting edge (14a, 14b, 14c, 14d) which is spaced apart from the front surface (13) along the longitudinal axis (17) of the punching tool (10) and extends substantially transverse to the longitudinal axis (17).

2. The punching tool (10) according to the preceding claim, wherein the at least one cutting edge (14a, 14b, 14c, 14d) is adjacent to a peripheral surface (15) of the punching tool (10).

3. The punching tool (10) according to any one of the preceding claims, wherein the at least one cutting edge (14a, 14b, 14c, 14d) is inclined relative to the longitudinal axis (17) of the punching tool (10), wherein preferably the inclination angle (α) between the at least one cutting edge (14a, 14b, 14c, 14d) and the longitudinal axis (17) lies in a range from 91° to 103°, preferably from 93° to 100°, and further preferably from 94° to 97°.

4. The punching tool (10) according to any one of the preceding claims, wherein the punching end (11) comprises a recess (16) being formed into the front surface (13) along the longitudinal axis (17) of the punching tool (10), wherein preferably the at least one cutting edge (14a, 14b, 14c, 14d) forms part of the recess (16), wherein further preferably the recess (16) tapers from the front surface (13) to the at least one cutting edge (14a, 14b, 14c, 14d).

5. The punching tool (10) according to the preceding claim, wherein the recess (16) has a T-shape, or an X-shape as seen in a direction from the punching end (11) to the holding end (12).

6. The punching tool (10) according to any one of the preceding claims, wherein the punching tool (10) comprises a flex portion (18) arranged between the punching end (11) and the holding end (12), wherein in the flex portion (18) the cross-sectional area of the punching tool (10) is reduced compared to portions of the punching tool (10) being adjacent to the flex portion (18), wherein preferably in the flex portion (18) the cross-sectional area continuously decreases to a minimum.

7. The punching tool (10) according to any one of the preceding claims, wherein the peripheral edge (19) of the front surface (13) is rounded and/or beveled, wherein said peripheral edge (19) is preferably substantially perpendicular to the longitudinal axis (17) of the punching tool (10).

8. The punching tool (10) according to any one of the preceding claims, wherein the punching tool (10) comprises at least two, particularly at least three, and further particularly at least four, cutting edges (14a, 14b, 14c, 14d) being configured as the at least one cutting edge (14a, 14b, 14c, 14d) according to the preceding claims, wherein preferably at least two of said cutting edges (14b, 14d) are arranged opposite to each other and are axially spaced apart from each other along the longitudinal axis (17).

9. A conductor receiving element (20) for an electrical connector, wherein the conductor receiving element (20) comprises
a plurality of elongated through holes (21a, 21b, 21c, 21d, 21e, 21f), wherein at least one through hole (21c) is at least partially blocked;
a first beam element (22) with a first end (23) and a second end (24), wherein the first end (23) and the second end (24) are attached to the inside surface of the at least one through hole (21c), and
a sealing pin (28) for sealing a hole of a collective sealing, wherein the sealing pin (28) is attached to the first beam element (22) and extends out of the at least one through hole (21c).

10. The conductor receiving element (20) according to the preceding claim, wherein the first beam element (22) and the sealing pin (28) do not intersect.

11. The conductor receiving element (20) according to any one of claims 9 or 10, wherein the conductor receiving element (20) comprises a second beam element (25) with a first end (26) and a second end (27), wherein the first beam element (22) and the second beam element (25) intersect, wherein the first end (26) and the second end (27) of the second beam element (25) are attached to the inside surface of the at least one through hole (21c).

12. The conductor receiving element (20) according to any one of claims 9 or 10, wherein the conductor receiving element (20) comprises a second beam element with a first end and a second end, wherein the first end of the second beam element is attached to the inside surface of the at least one through hole and the second end of the second beam element is attached to the first beam element.

13. The conductor receiving element (20) according to any one of claims 11 or 12, wherein the sealing pin (28) is attached to the first beam element (22) and the second beam element (25), wherein the first beam element (22) and the second beam element (25) preferably do not intersect with the sealing pin (28).

14. A punching system (30) comprising
at least one punching tool (10) according to any one of claims 1 to 8, and
the conductor receiving element (20) according to any one of claims 9 to 13, wherein the at least one punching tool (10) and the conductor receiving element (20) are configured such that the at least one punching tool (10) is slidingly guided in the at least one through hole (21c) which is at least partially blocked.

15. The punching system (30) according to the preceding claim, wherein the punching system (30) further comprises a receptacle (31) in which the conductor receiving element (20) can be floatingly supported.

## Patentansprüche

1. Stanzwerkzeug (10) zum Ausstanzen mindestens eines Balkenelements (22) mit beiden Enden (23, 24), die an der Innenfläche eines länglichen Durchgangslochs (21c) angebracht sind, wobei das Stanzwerkzeug (10) eine längliche Form mit einem Stanzende (11) und einem Halteende (12) aufweist, wobei das Stanzende (11) umfasst
eine Vorderfläche (13), um zuerst in das längliche Durchgangsloch eingeführt zu werden, und
mindestens eine Schneidkante (14a, 14b, 14c, 14d), die von der Vorderfläche (13) entlang der Längsachse (17) des Stanzwerkzeugs (10) beabstandet ist und sich im Wesentlichen quer zur Längsachse (17) erstreckt.

2. Stanzwerkzeug (10) nach dem vorhergehenden Anspruch, wobei die mindestens eine Schneidkante (14a, 14b, 14c, 14d) an eine Umfangsfläche (15) des Stanzwerkzeugs (10) angrenzt.

3. Stanzwerkzeug (10) nach einem der vorhergehenden Ansprüche, wobei die mindestens eine Schneidkante (14a, 14b, 14c, 14d) relativ zur Längsachse (17) des Stanzwerkzeugs (10) geneigt ist, wobei vorzugsweise der Neigungswinkel (α) zwischen der mindestens einen Schneidkante (14a, 14b, 14c, 14d) und der Längsachse (17) in einem Bereich von 91° bis 103°, vorzugsweise von 93° bis 100° und weiter vorzugsweise von 94° bis 97° liegt.

4. Stanzwerkzeug (10) nach einem der vorhergehenden Ansprüche, wobei das Stanzende (11) eine Aussparung (16) umfasst, die in die Vorderfläche (13) entlang der Längsachse (17) des Stanzwerkzeugs (10) eingeformt ist, wobei vorzugsweise die mindestens eine Schneidkante (14a, 14b, 14c, 14d) einen Teil der Aussparung (16) bildet, wobei sich weiter vorzugsweise die Aussparung (16) von der Vorderfläche (13) zu der mindestens einen Schneidkante (14a, 14b, 14c, 14d) verjüngt.

5. Stanzwerkzeug (10) nach dem vorhergehenden Anspruch, wobei die Aussparung (16) in einer Richtung vom Stanzende (11) zum Halteende (12) gesehen eine T-Form oder eine X-Form aufweist.

6. Stanzwerkzeug (10) nach einem der vorhergehenden Ansprüche, wobei das Stanzwerkzeug (10) einen Biegeabschnitt (18) umfasst, der zwischen dem Stanzende (11) und dem Halteende (12) angeordnet ist, wobei im Biegeabschnitt (18) die Querschnittsfläche des Stanzwerkzeugs (10) im Vergleich zu Abschnitten des Stanzwerkzeugs (10), die an den Biegeabschnitt (18) angrenzen, verringert ist, wobei vorzugsweise im Biegeabschnitt (18) die Querschnittsfläche kontinuierlich auf ein Minimum abnimmt.

7. Stanzwerkzeug (10) nach einem der vorhergehenden Ansprüche, wobei die Umfangskante (19) der Vorderfläche (13) abgerundet und/oder abgeschrägt ist, wobei die Umfangskante (19) vorzugsweise im Wesentlichen senkrecht zur Längsachse (17) des Stanzwerkzeugs (10) ist.

8. Stanzwerkzeug (10) nach einem der vorhergehenden Ansprüche, wobei das Stanzwerkzeug (10) mindestens zwei, insbesondere mindestens drei und weiter insbesondere mindestens vier Schneidkanten (14a, 14b, 14c, 14d) umfasst, die als die mindestens eine Schneidkante (14a, 14b, 14c, 14d) nach den vorhergehenden Ansprüchen konfiguriert sind, wobei vorzugsweise mindestens zwei der Schneidkanten (14b, 14d) einander gegenüberliegend angeordnet sind und entlang der Längsachse (17) axial voneinander beabstandet sind.

9. Leiteraufnahmeelement (20) für einen elektrischen Verbinder, wobei das Leiteraufnahmeelement (20) umfasst
eine Vielzahl von länglichen Durchgangslöchern (21a, 21b, 21c, 21d, 21e, 21f), wobei mindestens ein Durchgangsloch (21c) mindestens teilweise blockiert ist;
ein erstes Balkenelement (22) mit einem ersten Ende (23) und einem zweiten Ende (24), wobei das erste Ende (23) und das zweite Ende (24) an der Innenfläche des mindestens einen Durchgangslochs (21c) angebracht sind, und
einen Dichtungsstift (28) zum Abdichten eines Lochs einer kollektiven Dichtung, wobei der Dichtungsstift (28) an dem ersten Balkenelement (22) angebracht ist und sich aus dem mindestens einen Durchgangsloch (21c) erstreckt.

10. Leiteraufnahmeelement (20) nach dem vorhergehenden Anspruch, wobei sich das erste Balkenelement (22) und der Dichtungsstift (28) nicht schneiden.

11. Leiteraufnahmeelement (20) nach einem der Ansprüche 9 oder 10, wobei das Leiteraufnahmeelement (20) ein zweites Balkenelement (25) mit einem ersten Ende (26) und einem zweiten Ende (27) umfasst, wobei sich das erste Balkenelement (22) und das zweite Balkenelement (25) schneiden, wobei das erste Ende (26) und das zweite Ende (27) des zweiten Balkenelements (25) an der Innenfläche des mindestens einen Durchgangslochs (21c) angebracht sind.

12. Leiteraufnahmeelement (20) nach einem der Ansprüche 9 oder 10, wobei das Leiteraufnahmeelement (20) ein zweites Balkenelement mit einem ersten Ende und einem zweiten Ende umfasst, wobei das erste Ende des zweiten Balkenelements an der Innenfläche des mindestens einen Durchgangslochs angebracht ist und das zweite Ende des zweiten Balkenelements an dem ersten Balkenelement angebracht ist.

13. Leiteraufnahmeelement (20) nach einem der Ansprüche 11 oder 12, wobei der Dichtungsstift (28) an dem ersten Balkenelement (22) und dem zweiten Balkenelement (25) angebracht ist, wobei sich das erste Balkenelement (22) und das zweite Balkenelement (25) vorzugsweise nicht mit dem Dichtungsstift (28) schneiden.

14. Stanzsystem (30), umfassend
mindestens ein Stanzwerkzeug (10) nach einem der Ansprüche 1 bis 8, und
das Leiteraufnahmeelement (20) nach einem der Ansprüche 9 bis 13, wobei das mindestens eine Stanzwerkzeug (10) und das Leiteraufnahmeelement (20) so konfiguriert sind, dass das mindestens eine Stanzwerkzeug (10) in dem mindestens einen Durchgangsloch (21c), das mindestens teilweise blockiert ist, gleitend geführt wird.

15. Das Stanzsystem (30) nach dem vorstehenden Anspruch, wobei das Stanzsystem (30) ferner eine Aufnahme (31) umfasst, in welcher das Leiteraufnahmeelement (20) schwebend gelagert werden kann.

## Revendications

1. Un outil de perforation (10) pour perforer au moins un élément de barrette (22) ayant deux extrémités (23, 24) fixées à la surface intérieure d'un trou traversant allongé (21c), dans lequel l'outil de perforation (10) a une forme allongée avec une extrémité de perforation (11) et une extrémité de maintien (12), dans lequel l'extrémité de perforation (11) comprend :
une surface avant (13) destinée à être insérée la première dans le trou traversant allongé, et
au moins un bord coupant (14a, 14b, 14c, 14d) qui est espacé de la surface avant (13) le long de l'axe longitudinal (17) de l'outil de perforation (10) et s'étend substantiellement transversalement à l'axe longitudinal (17).

2. L'outil de perforation (10) selon la revendication précédente, dans lequel l'au moins un bord coupant (14a, 14b, 14c, 14d) est adjacent à une surface périphérique (15) de l'outil de perforation (10).

3. L'outil de perforation (10) selon l'une des revendications précédentes, dans lequel l'au moins un bord coupant (14a, 14b, 14c, 14d) est incliné par rapport à l'axe longitudinal (17) de l'outil de perforation, dans lequel de préférence l'angle d'inclinaison (a) entre l'au moins un bord coupant (14a, 14b, 14c, 14d) et l'axe longitudinal (17) s'étend dans une plage allant de 91° à 103°, de préférence de 93° à 100°, et encore plus préférablement de 94° à 97°.

4. L'outil de perforation (10) selon l'une des revendications précédentes, dans lequel l'extrémité coupante (11) comprend un creux (16) qui est formé dans la surface avant (13) le long de l'axe longitudinal (17) de l'outil de perforation (10), dans lequel de préférence l'au moins un bord coupant (14a, 14b, 14c, 14d) forme une partie du creux (16), dans lequel encore plus préférablement le creux (16) va en se réduisant de la surface avant (13) vers l'au moins un bord coupant (14a, 14b, 14c, 14d).

5. L'outil de perforation (10) selon la revendication précédente, dans lequel le creux (16) a une forme en T, ou une forme en X, dans une vue suivant une direction allant de l'extrémité de perforation (11) à l'extrémité de maintien (12).

6. L'outil de perforation (10) selon l'une des revendications précédentes, dans lequel l'outil de perforation (10) comprend une partie flexible (18) agencée entre l'extrémité de perforation (11) et l'extrémité de maintien (12), dans lequel dans la partie flexible (18) l'aire en section droite de l'outil de perforation (10) est réduite par rapport aux parties de l'outil de perforation (10) qui sont adjacentes à la partie flexible (18), de préférence dans lequel dans la partie flexible (18) l'aire en section droite diminue de façon continue jusqu'à un minimum.

7. L'outil de perforation (10) selon l'une des revendications précédentes, dans lequel le bord périphérique (19) de la surface avant (13) est arrondi et/ou chanfreiné, dans lequel ledit bord périphérique (19) est de préférence sensiblement perpendiculaire à l'axe longitudinal (17) de l'outil de perforation (10).

8. L'outil de perforation (10) selon l'une des revendications précédentes, dans lequel l'outil de perforation (10) comprend au moins deux, de préférence au moins trois, et plus particulièrement au moins quatre bords coupants (14a, 14b, 14c, 14d) qui sont configurés comme ledit bord coupant (14a, 14b, 14c, 14d) selon les revendications précédentes, dans lequel de préférence au moins deux desdits bords coupants (14b, 14d) sont agencés en vis-à-vis l'un de l'autre et sont axialement espacés l'un de l'autre le long de l'axe longitudinal (17).

9. Un élément de réception de conducteur (20) pour un connecteur électrique, dans lequel l'élément de réception de conducteur (20) comprend :
une pluralité de trous traversants allongés (21a, 21b, 21c, 21d, 21e, 21f), au moins l'un des trous traversants (21c) étant au moins partiellement bloqué ;
un premier élément de barrette (22) avec une première extrémité (23) et une seconde extrémité (24), la première extrémité (23) et la seconde extrémité (24) étant fixées à la surface intérieure de l'au moins un trou traversant (21c), et
une broche d'obturation (28) pour obturer un trou d'une obturation collective, la broche d'obturation (28) étant fixée au premier élément de barrette (22) et s'étendant hors de l'au moins un trou traversant 21c).

10. L'élément de réception de conducteur (20) selon la revendication précédente, dans lequel le premier élément de barrette (22) et la broche d'obturation (28) ne forment pas d'intersection.

11. L'élément de réception de conducteur (20) selon l'une des revendications 9 ou 10, dans lequel l'élément de réception de conducteur (20) comprend un second élément de barrette (25) avec une première extrémité (26) et une seconde extrémité (27), dans lequel le premier élément de barrette (22) et le second élément de barrette (25) forment une intersection, dans lequel la première extrémité (26) et la seconde extrémité (27) du second élément de barrette (25) sont fixées à la surface intérieure de l'au moins un trou traversant (21c).

12. L'élément de réception de conducteur (20) selon l'une des revendications 9 ou 10, dans lequel l'élément de réception de conducteur (20) comprend un second élément de barrette ayant une première extrémité et une seconde extrémité, dans lequel la première extrémité du second élément de barrette est fixée à la surface intérieure de l'au moins un trou traversant et la seconde extrémité du second élément de barrette est fixée au premier élément de barrette.

13. L'élément de réception de conducteur (20) selon l'une des revendications 11 ou 12, dans lequel la broche d'obturation (28) est fixée au premier élément de barrette (22) et au second élément de barrette (25), dans lequel de préférence le premier élément de barrette (22) et le second élément de barrette (25) ne forment pas d'intersection avec la broche d'obturation (28).

14. Un système de perforation (30) comprenant :
au moins un outil de perforation (10) selon l'une des revendications 1 à 8, et
l'élément de réception de conducteur (20) selon l'une des revendications 9 à 13, dans lequel l'au moins un outil de perforation (10) et l'élément de réception de conducteur (20) sont configurés de telle manière que l'au moins un outil de perforation (10) soit guidé à coulissement dans l'au moins un trou traversant (21c) qui est au moins partiellement bloqué.

15. Le système de perforation (30) selon la revendication précédente, dans lequel le système de perforation (30) comprend en outre un réceptacle (31) dans lequel l'élément de réception de conducteur (20) peut être supporté de manière flottante.
